# EUROPÄISCHE PATENTANMELDUNG

(11) **EP 2 720 288 A1**
(43) Veröffentlichungstag der Anmeldung: **16.04.2014**
(21) Anmeldenummer: 13004779.8
(22) Anmeldetag: 04.10.2013
(51) Int. Cl.: H01M 2/10, B32B 15/01, H01M 2/20, H01M 2/30, H01M 10/42, H01M 10/44, H02J 7/00, H05K 1/00

(54) **Wiederaufladbares Stromspeichermodul**

(30) Priorität: 12.10.2012 DE 102012020415
(71) Anmelder: Dynamis Holding AG, 3600 Thun (CH)
(72) Erfinder: Richter, Clemens, 78056 Villingen-Schwenningen (DE)
(74) Vertreter: Grättinger Möhring von Poschinger Patentanwälte Partnerschaft

(57) **Zusammenfassung**

Ein wiederaufladbares Stromspeichermodul umfasst einen Zellenblock (1) und ein Einzelzellenüberwachungssystem. Dabei weist der Zellenblock (1) eine Mehrzahl von miteinander gekoppelten Speicherzellen (2) und zwei Anschlusspole (6) auf. Jede Speicherzelle (2) weist ihrerseits einen zumindest vorrangig aus Kupfer bestehenden Minus-Pol (3) und einen zumindest vorrangig aus Aluminium bestehenden Plus-Pol (4) auf. Das Einzelzellenüberwachungssystem umfasst den einzelnen Speicherzellen (2) zugeordnete Überwachungsglieder (7) mit jeweils einer auf einer Platine (8) angeordneten Überwachungselektronik (9). Die Überwachungsglieder (7) sind dergestalt strukturell auf den Plus-Polen (4) der Speicherzellen (2) aufgebaut, dass mit der Platine (8) jeweils ein CupAl-Blech (15) starr verbunden ist, welches mit seiner Aluminiumseite stirnseitig an dem Plus-Pol (4) der betreffenden Speicherzelle (2) aufliegt.

## Beschreibung

Die vorliegende Erfindung betrifft ein wiederaufladbares Stromspeichermodul, umfassend einen Zellenblock und ein Einzelzellenüberwachungssystem, wobei der Zellenblock eine Mehrzahl von miteinander gekoppelten Speicherzellen und zwei Anschlusspole aufweist, jede Speicherzelle einen zumindest vorrangig aus Kupfer bestehenden Minus-Pol und einen zumindest vorrangig aus Aluminium bestehenden Plus-Pol aufweist und das Einzelzellenüberwachungssystem den einzelnen Speicherzellen zugeordnete Überwachungsglieder mit jeweils einer auf einer Platine angeordneten Überwachungselektronik umfasst.

Wiederaufladbare Stromspeichermodule der vorstehend angegebenen Art kommen auf diversen Anwendungsgebieten zum Einsatz, beispielsweise im Zusammenhang mit Photovoltaikanlagen. Dabei erfolgt während des Ladens typischerweise eine Einzelzellenüberwachung, um Unter- und Überspannungszustände zu vermeiden, letzteres insbesondere im Hinblick auf eine ansonsten beim Laden des Stromspeichermoduls ggf. bestehende Brand- bzw. Explosionsgefahr.

Bekannt ist ein wiederaufladbares Stromspeichermodul beispielsweise aus der WO 2008/128296 A1.

Auch die DE 195 45 833 A1 offenbart ein wiederaufladbares Stromspeichermodul mit einem Einzelzellenüberwachungssystem, welches den einzelnen Speicherzellen zugeordnete Überwachungsglieder umfasst. Die die Überwachungselektronik aufweisenden Platinen sind dabei auf die Anschlüsse der einzelnen Speicherzellen montiert, wobei unterschiedliche Anordnungen vorgeschlagen werden, insbesondere indem die Platine jeweils eine eigenständige Funktionseinheit bildet, die mit den beiden Anschlüssen der jeweiligen Speicherzelle verbunden wird, oder aber indem jeweils das Überwachungsglied Teil eines zwei einander benachbarte Speicherzellen verbindenden Polverbinders ist, wodurch ein hochintegriertes Modul entsteht.

Nachteilig ist insoweit der erhebliche Aufwand, der insbesondere auch mit der Bevorratung diverser unterschiedlicher, jeweils mit einem Überwachungsglied ausgestatteter Polverbinder (bzw. Funktionseinheiten) für verschiedene Stromspeichermodule verbunden ist.

Die vorliegende Erfindung hat sich zum Ziel gesetzt, ein wiederaufladbares Stromspeichermodul der gattungsgemäßen Art bereitzustellen, das sich bei einer guten Funktionalität durch einen besonders geringen konstruktiven und baulichen Aufwand auszeichnet.

Gelöst wird diese Aufgabenstellung erfindungsgemäß dadurch, dass bei einem gattungsgemäßen wiederaufladbaren Stromspeichermodul die Überwachungsglieder dergestalt strukturell auf den Plus-Polen der Speicherzellen aufgebaut sind, dass mit der Platine jeweils ein CupAl-Blech starr verbunden ist, welches mit seiner Aluminiumseite stirnseitig an dem Plus-Pol der betreffenden Speicherzelle aufliegt. Auf diese Weise ergeben sich eine Reihe von Vorteilen insbesondere gegenüber solchen gattungsgemäßen wiederaufladbaren Stromspeichermodulen, bei denen die Überwachungsglieder strukturell auf den Minus-Polen der Speicherzellen aufgebaut sind, indem sie jeweils mit einem mit Kupfer beschichteten Bereich der Platine stirnseitig an dem Minus-Pol der betreffenden Speicherzelle aufliegen, wobei jeweils ein an der Platine angelötetes Ausgleichskabel mit dem Plus-Pol der betreffenden Speicherzelle elektrisch leitend verbunden ist. So genügt beispielsweise eine einziger Montageschritt für sowohl die mechanische Anbringung des jeweiligen Überwachungsglieds an sowie die elektrische Kontaktierung mit der betreffenden Speicherzelle. Weiterhin ist ausgeschlossen, dass Zweistoff-Ringösen (insbesondere CupAl-Ringösen), wie sie nach dem vorstehend angesprochenen Stand der Technik jeweils am Ende des Ausgleichskabels zu dessen Kontaktierung mit dem Plus-Pol angebracht sind, mit der falschen Seite auf dem Plus-Pol aufliegend montiert werden, was zu Korrosionseffekten und infolgedessen zu Funktionsbeeinträchtigungen führen kann.

Gemäß einer ersten bevorzugten Weiterbildung der Erfindung ist das CupAl-Blech mit der Platine jeweils sowohl elektrisch als auch thermisch leitend vernietet, verschraubt oder verlötet. Somit ist auch eine Abfuhr der in der Überwachungselektronik entstehenden Wärme in den Plus-Pol, auf dem das jeweilige Überwachungsglied aufgebaut ist, gewährleistet.

Im Hinblick auf eine mit einem besonders geringen Aufwand verbundene Montage ist das CupAl-Blech besonders bevorzugt gelocht, wobei die Verbindung des Ladungsüberwachungsgliedes mit dem Plus-Pol der betreffenden Speicherzelle mittels einer das Loch des CupAl-Blechs durchsetzenden Schraube erfolgt.

Eine wiederum andere bevorzugte Weiterbildung der vorliegenden Erfindung zeichnet sich dadurch aus, dass die Verbindung der Speicherzellen untereinander durch Leiterlaschen, insbesondere in Form von Kupfer-Leiterlaschen erfolgt, wobei besonders bevorzugt die Kupfer-Leiterlaschen jeweils mit einem ihrer beiden Endabschnitte auf der Kupferseite des CupAl-Blechs des zugeordneten Überwachungsglieds aufliegen. Somit ist, mit anderen Worten, das CupAl-Blech der Überwachungsglieder bevorzugt jeweils zwischen der der Stirnseite des betreffenden Plus-Pols der jeweiligen Speicherzelle und dem zugeordneten Endabschnitt einer Kupfer-Leiterlasche eingeklemmt, was impliziert, dass es sich bei der Kupfer-Leiterlasche und dem Überwachungsglied jeweils um zwei baulich getrennte Teile handelt. Dies ist günstig im Hinblick auf eine ökonomisch attraktive Baukasten-Bauweise. Wiederum im Hinblick auf eine einfache Montage sind die besagten Kupfer-Leiterlaschen bevorzugt beidseitig gelocht.

Weiter oben wurde bereits dargelegt, dass das Aufbauen der Überwachungsglieder auf den Plus-Polen der Speicherzellen für sowohl die mechanische Anbringung des jeweiligen Überwachungsglieds an sowie die elektrische Kontaktierung mit der betreffenden Speicherzelle ausreichen kann. In diesem Sinne zeichnet sich eine bevorzugte Weiterbildung der Erfindung dadurch aus, dass zusätzlich zu jener Verbindung der Überwachungsglieder mit den Plus-Polen der Speicherzellen über die besagten CupAl-Bleche weder eine mechanische, noch - mit Ausnahme jenes Überwachungsgliedes, welches der den Minus-Anschlusspol des Zellenblocks aufweisenden Speicherzelle zugeordnet ist - eine direkte elektrische Verbindung der Überwachungsglieder mit den Speicherzellen besteht. Dabei sind die Überwachungsglieder untereinander über Leitungen verbunden, wobei - abgesehen von der vorstehend dargelegten Ausnahme - die elektrische Kontaktierung der Überwachungsglieder mit dem Minuspol der jeweils betreffenden Speicherzelle indirekt erfolgt, und zwar über jene Leitung, welche das betreffende Überwachungsglied mit dem Überwachungsglied der minusseitig benachbarten Speicherzelle verbindet, das Überwachungsglied der minusseitig benachbarten Speicherzelle und die weiter oben bereits erwähnte Leiterlasche, welche den Minus-Pol der betreffenden Speicherzelle mit dem Plus-Pol der minusseitig benachbarten Speicherzelle verbindet. Die besagten Leitungen sind besonders bevorzugt über Stecker-Buchse-Steckverbindungen an die jeweilige Überwachungselektronik angeschlossen. Eine solche Anbindung der Leitungen an die die Überwachungsglieder über Steckverbindungen, insbesondere über Standard-Steckverbindungen, ist unter Aspekten einer einfachen Montage besonders günstig.

In wiederum anderer bevorzugter Weiterbildung der Erfindung erfolgt über die vorstehend dargelegten Leitungen eine signalübertragende Verbindung der Überwachungsglieder mit einer zentralen Steuereinheit. Dabei kann, insbesondere wenn ein Teil der Leitungen als Ladestromleitungen ausgeführt ist, die Signalübertragung von den Überwachungselektroniken auf die zentrale Steuereinheit induktiv über jene Ladestromleitungen erfolgen. Auch ist - insbesondere für die Baugröße - günstig, wenn eine Signalübertragung von der jeweiligen Überwachungselektronik auf die jeweilige Leitung über Optokoppler erfolgt.

Alternativ zu der Signalübertragung von den Überwachungsgliedern zu der zentralen Steuereinheit über die die einzelnen Überwachungsglieder untereinander verbindenden Leitungen kommt beispielsweise auch in Betracht, dass die Überwachungsglieder mittels einer Funkverbindung mit einer zentralen Steuereinheit kommunizieren.

Was das Ladeprinzip angeht, so kommen im Rahmen der vorliegenden Erfindung verschiedene Ausgestaltungen in Betracht. So kann namentlich ein passives Ladungsbalancing erfolgen, insbesondere indem oberhalb einer vorgegeben Zellenspannung ein stromgeregelter NPN-Leistungstransistor eingeschaltet wird, um einen definierten Strom an der Zelle vorbei zu leiten. Es kommt aber auch ein aktives Ladungsbalancing in Betracht, insbesondere indem bei einer Speicherzelle überschüssige Ladung einer anderen Speicherzelle zugeleitet wird. Dabei können die Ladungsüberwachungsglieder für das aktive Ladungsbalancing mit Ladestrom-Transformatoren ausgestattet sein.

Im Folgenden wird die vorliegende Erfindung anhand eines in der Zeichnung veranschaulichten bevorzugten Ausführungsbeispiels näher erläutert. Gezeigt ist dabei in
- Fig. 1: ein vier Speicherzellen umfassender Zellenblock mit den zugeordneten Überwachungsgliedern eines Einzelzellenüberwachungssystems und in

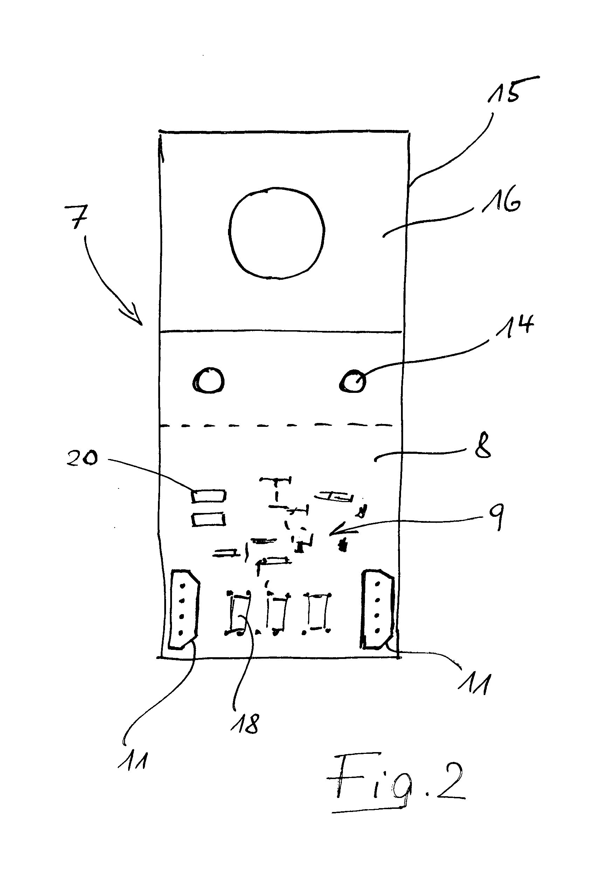

- Fig. 2: in stark vergrößerter Darstellung eines der in Fig. 1 gezeigten Überwachungsglieder.

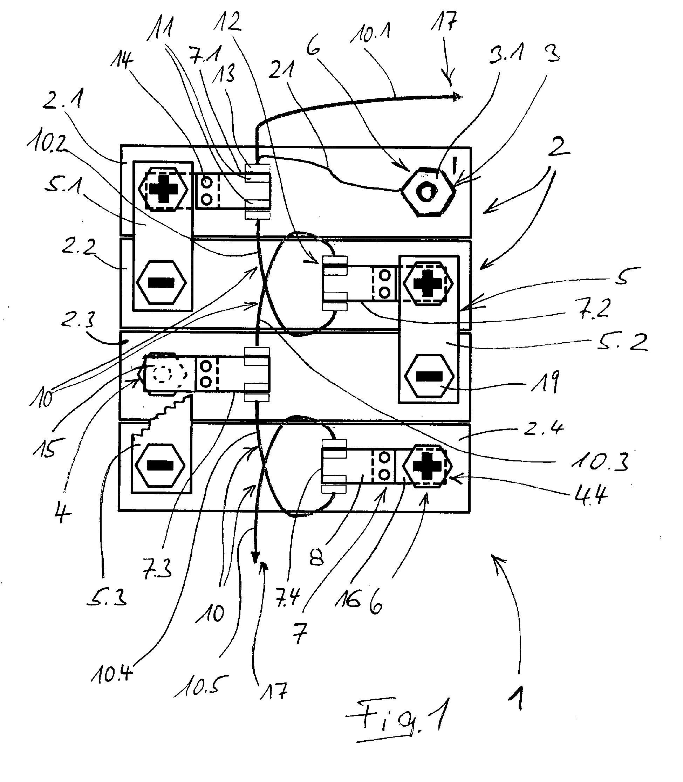

Das in Fig. 1 veranschaulichte wiederaufladbare Stromspeichermodul umfasst einen Zellenblock 1 mit vier Speicherzellen 2. Jede der Speicherzellen weist einen aus Kupfer bestehenden Minus-Pol 3 und einen aus Aluminium bestehenden Plus-Pol 4 auf. Dabei sind die Speicherzellen 2 untereinander über drei beidseitig gelochte Kupfer-Leiterlaschen 5 elektrisch leitend gekoppelt, und zwar dergestalt, dass der Plus-Pol der ersten Speicherzelle 2.1 über die erste Kupfer-Leiterlasche 5.1 mit dem Minus-Pol der zweiten Speicherzelle 2.2, der Plus-Pol der zweiten Speicherzelle 2.2 über die zweite Kupfer-Leiterlasche 5.2 mit dem Minus-Pol der dritten Speicherzelle 2.3 und der Plus-Pol der dritten Speicherzelle 2.3 über die dritte Kupfer-Leiterlasche 5.3 mit dem Minus-Pol der vierten Speicherzelle 2.4 verbunden ist. Der Minus-Pol 3.1 der ersten Speicherzelle 2.1 und der Plus-Pol 4.4 der vierten Speicherzelle 2.4 stellen demgegenüber die beiden Anschlusspole 6 des Zellenblocks 1 dar.

Der Zellenblock 1 ist mit einem Einzelzellenüberwachungssystem ausgestattet. Hierzu ist jeder Speicherzelle 2 ein eigenes Überwachungsglied 7 mit einer auf einer Platine 8 angeordneten Überwachungselektronik 9 zugeordnet, wobei die Überwachungsglieder 7 (und somit die Überwachungselektroniken 9) untereinander über mehradrige Leitungen 10 verbunden sind. Auf jeder Platine 8 sind weiterhin zwei Buchsen 11 angeordnet, welche mit der betreffenden Überwachungselektronik 9 kontaktiert und dergestalt Teil von Stecker-Buchse-Steckverbindungen 12 sind, dass jede Buchse 11 zur Aufnahme eines an einer zugeordneten Leitung 10 angeordneten Steckers 13 geeignet ist.

Weiterhin ist mit jeder Platine 8 - jeweils über zwei Nieten 14 - ein gelochtes CupAl-Blech 15 starr verbunden, wobei über aneinander anliegende Kontaktflächen eine Wärmeübertragung von der Platine 8 auf das CupAl-Blech 15 möglich ist. Die Orientierung des CupAl-Blechs 15 ist dabei jeweils dergestalt, dass die Kupfer-Oberfläche 16 zu der gleichen Seite weist wie die Buchsen 11, die Aluminium-Oberfläche hingegen zur gegenüberliegenden Seite. Das CupAl-Blech 15 steht dabei jeweils als leitender Kontakt mit der zugeordneten Überwachungselektronik 9 in Verbindung.

Die Überwachungsglieder 7 sind dergestalt strukturell auf den Plus-Polen 4 der Speicherzellen 2 aufgebaut, dass das jeweilige CupAl-Blech 15 mit seiner Aluminiumseite stirnseitig an dem Plus-Pol 4 der betreffenden Speicherzelle 2 aufliegt. Das CupAl-Blech 15 ist dabei zwischen dem Plus-Pol 4 der betreffenden Speicherzelle 2 und der jeweils zugeordneten Kupfer-Leiterlasche 5 eingeklemmt, so dass die Kupfer-Leiterlasche 5 jeweils auf der Kupferseite des CupAl-Blechs 15 des betreffenden Überwachungsglieds 7 aufliegt. Eine mechanisch feste Verbindung erfolgt jeweils mittels einer in eine Gewindebohrung des jeweiligen Plus-Pols 6 eingeschraubten, die zueinander fluchtenden Löcher von Kupfer-Leiterlasche 5 und CupAl-Blech 15 durchsetzenden Schraube 19.

Über die Leitungen 10 eine erfolgt signalübertragende Verbindung der Überwachungsglieder 7 mit einer (nicht gezeigten) zentralen Steuereinheit, an welche die freien Enden 17 jener beiden Leitungen 10.1 und 10.5, welche nicht zwei Überwachungsglieder 7 untereinander verbinden, angeschlossen sind. Zur Signalübertragung von der jeweiligen Überwachungselektronik 9 auf die jeweilige Leitung 10 verfügt die betreffende Überwachungselektronik 9 jeweils Optokoppler 18. Zur optischen Kontrolle können in die jeweilige Überwachungselektronik 9 Leuchtanzeigen 20 integriert sein.

Weiterhin erfolgt - bei den drei Speicherzellen 2.2, 2.3 und 2.4 - über die Leitungen 10.2, 10.3 und 10.4 eine indirekte elektrische Kontaktierung der jeweiligen Überwachungsglieder 7.2, 7.3 und 7.4 mit dem Minuspol der jeweils betreffenden Speicherzelle über das Überwachungsglied 7.1, 7.2 und 7.3 der jeweils minusseitig benachbarten Speicherzelle 2.1, 2.2 und 2.3 und die Leiterlasche 5.1, 5.2 und 5.3. Nur im Falle der den Minus-Anschlusspol aufweisenden Speicherzelle 2.1 erfolgt eine direkte Verbindung des Überwachungsgliedes 7.1 mit dem betreffenden Minus-Pol 3.1 über einen gesonderten Kontaktdraht 21.

## Patentansprüche

1. Wiederaufladbares Stromspeichermodul, umfassend einen Zellenblock (1) und ein Einzelzellenüberwachungssystem, wobei
- der Zellenblock (1) eine Mehrzahl von miteinander gekoppelten Speicherzellen (2) und zwei Anschlusspole (6) aufweist,
- jede Speicherzelle (2) einen zumindest vorrangig aus Kupfer bestehenden Minus-Pol (3) und einen zumindest vorrangig aus Aluminium bestehenden Plus-Pol (4) aufweist und
- das Einzelzellenüberwachungssystem den einzelnen Speicherzellen (2) zugeordnete Überwachungsglieder (7) mit jeweils einer auf einer Platine (8) angeordneten Überwachungselektronik (9) umfasst,
**dadurch gekennzeichnet,**
**dass** die Überwachungsglieder (7) dergestalt strukturell auf den Plus-Polen (4) der Speicherzellen (2) aufgebaut sind, dass mit der Platine (8) jeweils ein CupAl-Blech (15) starr verbunden ist, welches mit seiner Aluminiumseite stirnseitig an dem Plus-Pol (4) der betreffenden Speicherzelle (2) aufliegt.

2. Stromspeichermodul nach Anspruch 1, **dadurch gekennzeichnet, dass** das CupAl-Blech (15) mit der Platine (8) elektrisch und thermisch leitend vernietet, verschraubt oder verlötet ist.

3. Stromspeichermodul nach Anspruch 1 oder Anspruch 2, **dadurch gekennzeichnet, dass** das CupAl-Blech (15) gelocht ist, wobei die Verbindung des Überwachungsgliedes (7) mit dem Plus-Pol (4) der betreffenden Speicherzelle (2) mittels einer das Loch des CupAl-Blechs (15) durchsetzenden Schraube (19) erfolgt.

4. Stromspeichermodul nach einem der Ansprüche 1 bis 3, **dadurch gekennzeichnet, dass** die Verbindung der Speicherzellen (2) untereinander durch Leiterlaschen, insbesondere Kupfer-Leiterlaschen (5) erfolgt.

5. Stromspeichermodul nach Anspruch 4, **dadurch gekennzeichnet, dass** die Kupfer-Leiterlasche (5) jeweils auf der Kupferseite (16) des CupAl-Blechs (15) des Überwachungsglieds (7) aufliegt.

6. Stromspeichermodul nach einem der Ansprüche 1 bis 5, **dadurch gekennzeichnet, dass** die Überwachungsglieder (7) untereinander über Leitungen (10) verbunden sind,

7. Stromspeichermodul nach Anspruch 6, **dadurch gekennzeichnet, dass** bei jenen Speicherzellen (2.2, 2.3, 2.4), welche nicht den Minus-Anschlusspol des Zellenblocks 1 aufweisen, über die Leitungen (10.2, 10.3, 10.4), das Überwachungsglied (7.1, 7.2, 7.3) der jeweils minusseitig benachbarten Speicherzelle (2.1, 2.2, 2.3) und Leiterlaschen (5.1, 5.2, 5.3.) eine indirekte elektrische Kontaktierung der jeweiligen Überwachungsglieder (7.2, 7.3, 7.4) mit dem Minuspol der jeweils betreffenden Speicherzelle erfolgt.

8. Stromspeichermodul nach Anspruch 6 oder Anspruch 7, **dadurch gekennzeichnet, dass** die Leitungen (10) über Stecker-Buchse-Steckverbindungen (13) an die jeweilige Überwachungselektronik (9) angeschlossen sind.

9. Stromspeichermodul nach einem der Ansprüche 6 bis 8, **dadurch gekennzeichnet, dass** über die Leitungen (10) eine signalübertragende Verbindung der Überwachungsglieder (7) mit einer zentralen Steuereinheit erfolgt.

10. Stromspeichermodul nach einem der Ansprüche 6 bis 9, **dadurch gekennzeichnet, dass** zumindest ein Teil der Leitungen (10) als Ladestromleitungen ausgeführt ist, über die eine induktive Signalübertragung von den Überwachungselektroniken (9) auf die zentrale Steuereinheit erfolgt.

11. Stromspeichermodul nach Anspruch 9 oder Anspruch 10, **dadurch gekennzeichnet, dass** eine Signalübertragung von der jeweiligen Überwachungselektronik (9) auf die jeweilige Leitung (10) über Optokoppler (18) erfolgt.

12. Stromspeichermodul nach einem der Ansprüche 1 bis 8, **dadurch gekennzeichnet, dass** die Überwachungsglieder (7) mittels einer Funkverbindung mit einer zentralen Steuereinheit kommunizieren.

13. Stromspeichermodul nach einem der Ansprüche 1 bis 12, **dadurch gekennzeichnet, dass** ein passives Ladungsbalancing erfolgt, indem oberhalb einer vorgegeben Zellenspannung ein stromgeregelter NPN-Leistungstransistor eingeschaltet wird, um einen definierten Strom an der betreffenden Speicherzelle (2) vorbei zu leiten.

14. Stromspeichermodul nach einem der Ansprüche 1 bis 12, **dadurch gekennzeichnet, dass** ein aktives Ladungsbalancing erfolgt, indem bei einer Speicherzelle (2) überschüssige Ladung einer anderen Speicherzelle (2) zugeleitet wird.

15. Stromspeichermodul nach Anspruch 14, **dadurch gekennzeichnet, dass** die Überwachungsglieder (7) für das aktive Ladungsbalancing mit Ladestrom-Transformatoren ausgestattet sind.
